# EUROPEAN PATENT SPECIFICATION

(11) **EP 4 650 092 B1**
(45) Date of publication and mention of the grant of the patent: **02.12.2026**
(21) Application number: 25176505.3
(22) Date of filing: 14.05.2025
(51) Int. Cl.: G04B 19/12, G04B 45/00, G04D 3/00, B23K 26/352

(54) **TIMEPIECE COMPONENT AND METHOD FOR MANUFACTURING TIMEPIECE COMPONENT**
UHRKOMPONENTE UND VERFAHREN ZUR HERSTELLUNG EINER UHRKOMPONENTE
COMPOSANT HORLOGER ET PROCÉDÉ DE FABRICATION D'UN COMPOSANT HORLOGER

(30) Priority: 17.05.2024 JP 2024080975
(43) Date of publication of application: 19.11.2025
(73) Proprietor: Seiko Epson Corporation, Tokyo 160-8801 (JP)
(72) Inventor: YOSHINAGA, Ai, Suwa-shi, Nagano 392-8502 (JP); HAYASHI, Shigeyuki, Suwa-shi, Nagano 392-8502 (JP)
(74) Representative: MERH-IP Matias Erny Reichl Hoffmann Patentanwälte PartG mbB

(56) References cited:
- EP-A1- 3 616 938
- CH-A2- 720 201
- US-A1- 2023 008 589

## Description

### BACKGROUND

### 1. Technical Field

The present disclosure relates to a timepiece component and a method for manufacturing a timepiece component.

### 2. Related Art

As a method of forming a satin pattern at various timepiece components such as a dial, a case, a case back, and a main plate, blast processing as described in JP-A-9-38864 is known.

Patent application US 2023/008589 A1 discloses a timepiece having a satin pattern formed by irradiating a base with a laser, according to a prior art.

When a timepiece component which has been subjected to blast processing to form a satin pattern is held with tweezers, for example, during timepiece assembly, protrusions may be crushed and become noticeable as scratches. Therefore, there is a demand for a timepiece component with a satin pattern processed to cause less noticeable scratches when held with tweezers or the like, and a method for manufacturing the timepiece component.

### SUMMARY

According to an aspect of the present disclosure, there is provided a timepiece component having a satin pattern formed, in which an average value of an average length RSm of a roughness curve of a surface of the satin pattern is 40 µm or more and 135 µm or less, and an average value of a skewness Rsk of the roughness curve is -3.1 or more and 0 or less.

According to an aspect of the present disclosure, there is provided a method for manufacturing a timepiece component, the method including: irradiating a base with a laser, and forming a satin pattern in a processing region of the base, in which an average value of an average length RSm of a roughness curve of a surface of the satin pattern is 40 µm or more and 135 µm or less, and an average value of a skewness Rsk of the roughness curve is -3.1 or more and 0 or less.

### BRIEF DESCRIPTION OF THE DRAWINGS

FIG. 1 is a front view illustrating a timepiece according to an embodiment.
FIG. 2 is a schematic sectional view illustrating a laser irradiation device according to the embodiment.
FIG. 3 is a schematic plan view illustrating a scanning direction of a pulse laser and processing marks according to the embodiment.
FIG. 4A is a view illustrating a processing region of an example.
FIG. 4B is a view illustrating a processing region of a comparative example.
FIG. 5A is a table showing measurement values of each parameter of a surface roughness of the example.
FIG. 5B is a table showing measurement values of each parameter of a surface roughness of the comparative example.
FIG. 6A is a graph showing an example of a roughness curve of the example.
FIG. 6B is a graph showing an example of a roughness curve of the comparative example.

### DESCRIPTION OF EMBODIMENTS

Hereinafter, a timepiece 1 of an embodiment of the present disclosure will be described with reference to the drawings.

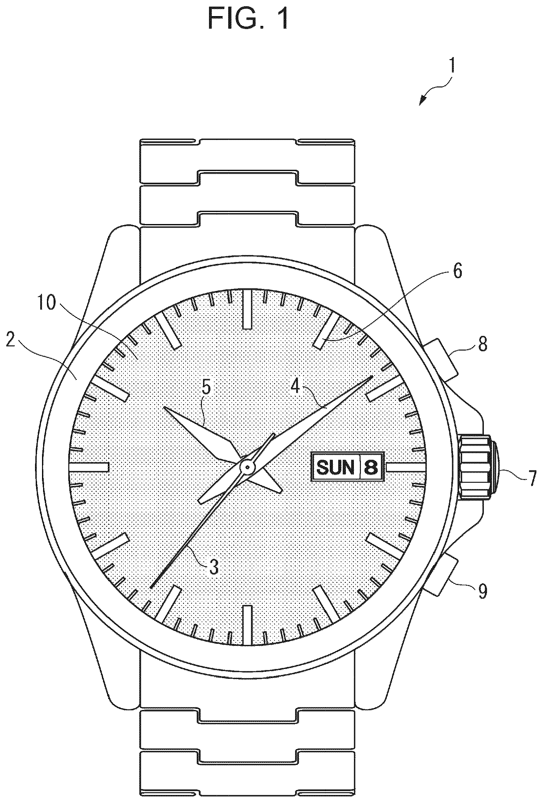

FIG. 1 is a front view illustrating the timepiece 1. In the present embodiment, the timepiece 1 is configured as a wristwatch worn on a wrist of a user.

As illustrated in FIG. 1, the timepiece 1 includes a metal exterior case 2. Inside the exterior case 2, a disk-shaped dial 10, a seconds hand 3, a minute hand 4, an hour hand 5, a crown 7, an A button 8, and a B button 9 are provided. The dial 10 is provided with hour markers 6 for indicating time. In addition, a movement (not illustrated) or the like is provided on a back side of the dial 10.

A satin pattern similar to a pattern formed by sandblast processing is formed at a surface of the dial 10 of the timepiece 1 by laser processing.

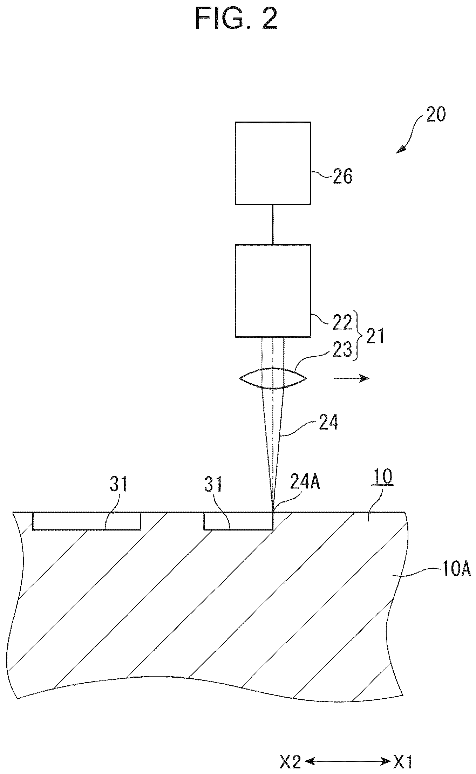

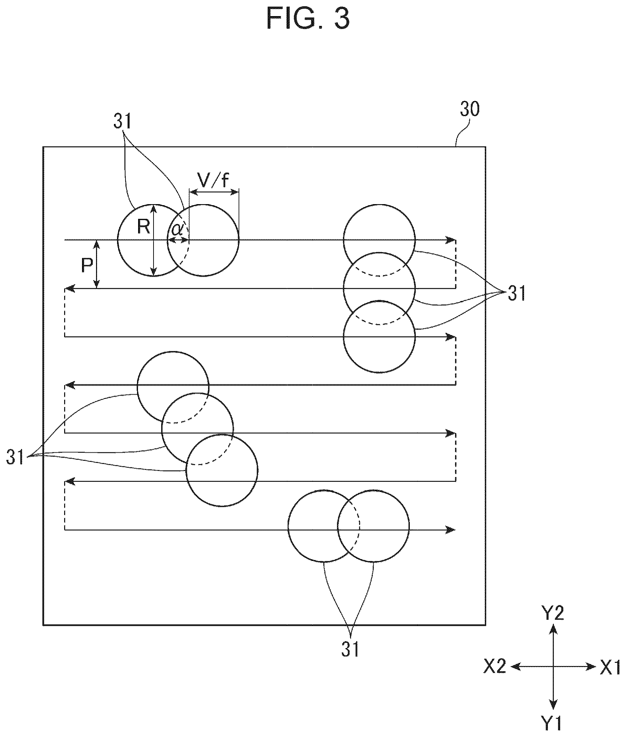

A laser processing method for the dial 10 will be described with reference to FIGS. 2 and 3. A base 10A constituting the dial 10 is made of a metal material such as brass, titanium, stainless steel, pure iron, nickel silver, duralumin, steel, or an alloy containing at least one of these metals. The material of the base 10A is not limited to these materials, and may be any material that is used for a timepiece component and that can be subjected to laser processing.

As illustrated in FIG. 2, a laser irradiation device 20 that irradiates the base 10A of the dial 10 with a pulse laser includes a laser irradiator 21, a moving mechanism (not illustrated), and a control device 26.

The laser irradiator 21 includes a laser emitting unit 22 and a focusing optical system 23. The laser emitting unit 22 emits a nanosecond laser having a pulse width in a nanosecond range as a pulse laser 24.

The focusing optical system 23 focuses the pulse laser 24 on a focusing portion 24A. Since an energy of the pulse laser 24 is large in the focusing portion 24A, metal particles are removed from a surface of the base 10A. When the base 10A is irradiated with the pulse laser 24 once, as illustrated in FIG. 3, a processing mark 31, that is, a recess having a spot diameter R controlled by the focusing optical system 23 is formed in a processing region 30 at the surface of the base 10A.

In the present embodiment, the laser irradiator 21 is set to emit the pulse laser 24 having a frequency f of 160 kHz and a spot diameter R of 30 µm.

The moving mechanism is, for example, a mechanism that moves a table on which the base 10A to be processed is placed in an X-axis direction and a Y-axis direction, and may be a mechanism that can move the pulse laser 24 emitted from the laser irradiator 21 relative to the base 10A in a scanning direction. As illustrated in FIG. 3, the moving mechanism of the present embodiment repeats an operation of moving the laser irradiator 21 relative to the base 10A in an X1 direction, then moving the laser irradiator 21 in a Y1 direction by a predetermined pitch P, then moving the laser irradiator 21 in an X2 direction, and then moving the laser irradiator 21 in the Y1 direction by the pitch P.

In the present embodiment, the control device 26 controls the moving mechanism to move the laser irradiator 21 relative to the base 10A in the X1 direction and the X2 direction with a scanning speed V of 1500 mm/s. The pitch P, which is an interval in the Y1 direction, is set in a range of 0.3 times to 1.15 times the spot diameter R. When the pitch P is set to be less than 0.3 times the spot diameter R, an overlapping area of adjacent processing marks 31 increases, resulting in a decrease in processing efficiency. When the pitch P is set to be greater than 1.15 times the spot diameter R, the number of unprocessed regions increases, resulting in degradation in aesthetic appearance as a timepiece component. Therefore, the pitch P is preferably set to be in the range of 0.3 times to 1.15 times the spot diameter R. Furthermore, the pitch P is more preferably set to be in a range of 0.3 times to 1 time the spot diameter R.

When the processing marks 31 having the spot diameter R are continuously formed by the pulse laser 24, as illustrated in FIG. 3, a length α in the scanning direction of a portion where the processing marks 31 overlap each other is α = R - V/f. Here, V/f is a distance that the pulse laser 24 advances in one cycle when the pulse laser 24 having the frequency f is continuously emitted, that is, a moving distance from an irradiation position of the pulse laser 24 to the next irradiation position of the pulse laser 24.

In the present embodiment, the length α is set so that parts of the processing marks 31 continuous in the scanning direction overlap each other, that is, 0 ≤ α < R. In the present embodiment, since R = 30 µm, V = 1500 mm/s = 1,500,000 µm/s, and f = 160 kHz = 160,000 Hz, α = 30 - 9.375 = 20.625 µm. It should be noted that the expression that parts of the processing marks 31 overlap each other also includes a state where the processing marks 31 are in contact with each other, and 0 = α indicates that state. That is, the overlapping of parts of the processing marks 31 means that the processing marks 31 are coupled together without any gaps.

The control device 26 alternately sets an irradiation ON time Ton and an irradiation OFF time Toff of the pulse laser 24, and controls each of the irradiation ON time Ton and the irradiation OFF time Toff to be a random time. As a result, the processing marks 31 are irregularly formed at the surface of the base 10A by the laser processing, so that rough surface processing is performed as is performed by sandblast processing. In the present embodiment, since the frequency f of the pulse laser 24 is 160 kHz, a period T of the pulse laser 24 is 6.25 µm. The control device 26 sets the irradiation ON time Ton to T × Ron and the irradiation OFF time Toff to T × Roff. Here, Ron and Roff are random integers. In the present embodiment, Ron is a random integer in a range of 0 to 8, and Roff is a random integer in a range of 0 to 6. Here, "random" means that there is no regularity, and that it is random and irregular.

The control device 26 randomly sets the irradiation ON time Ton and the irradiation OFF time Toff when the laser irradiator 21 moves in the X1 direction and the X2 direction, and controls the irradiation of the pulse laser 24. Further, the control device 26 controls the emission of the pulse laser 24 to be turned off when the laser irradiator 21 moves in the Y1 direction. As a result, the processing marks 31 are continuously formed by the emission of the pulse laser 24 with various lengths in the X1 direction and the X2 direction, which are the scanning directions, and lengths of unprocessed portions are also randomly set. Therefore, random processing marks 31 similar to marks formed by the sandblast processing can be formed.

In FIGS. 2 and 3, the laser processing is performed by moving the laser irradiator 21 relative to the base 10A in the X1 direction and the X2 direction. In the present embodiment, the laser processing is performed by moving the laser irradiator 21 not only in the X1 direction and the X2 direction, but also in the Y1 direction and the Y2 direction, and by moving the laser irradiator 21 in a 45-degree direction with respect to the X direction and the Y direction. That is, in the present embodiment, the satin pattern is processed by scanning the base 10A with the pulse laser 24 in a plurality of directions.

The control device 26 controls the pulse laser 24 and the moving mechanism based on preset processing pattern data to process a predetermined satin pattern in the processing region 30. Therefore, in the laser processing by the laser irradiation device 20, the same processing pattern data is used, and thus the same satin pattern can be always processed.

Next, an example in which a satin pattern is formed by laser processing and a comparative example in which a satin pattern is formed by sandblasting will be described in comparison.

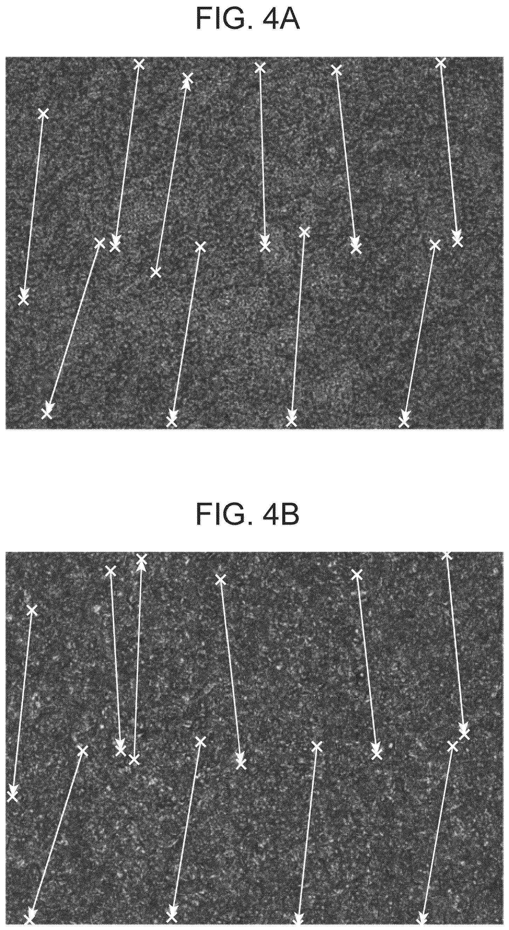

FIG. 4A is a view illustrating the satin pattern of the example formed by laser processing. FIG. 4B is a view illustrating the satin pattern by sandblasting. As illustrated in FIGS. 4A and 4B, ten reference lines having a reference length of, for example, 250 µm were set in an area of a predetermined size, for example, 500 µm × 700 µm, and a surface roughness was measured along each reference line using a surface roughness measuring machine.

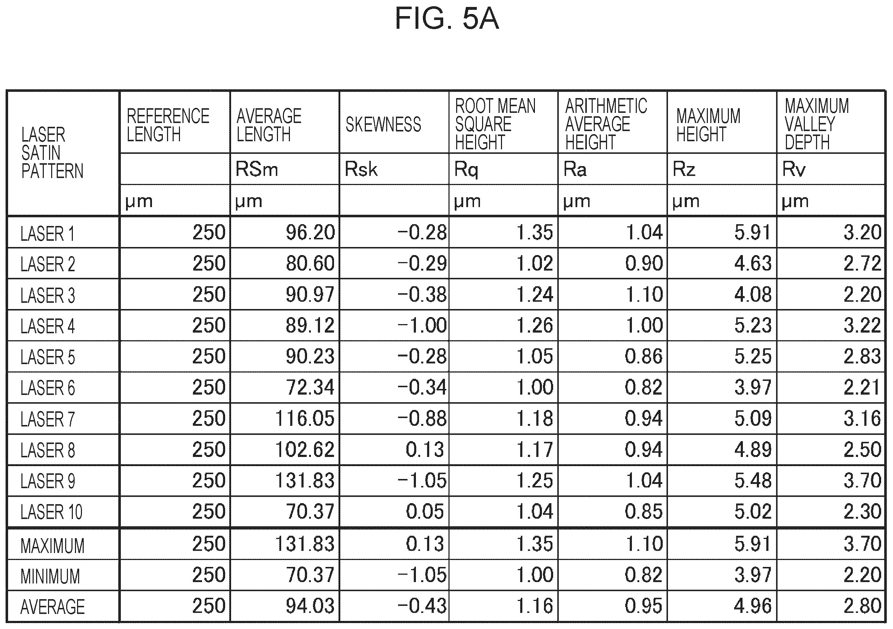

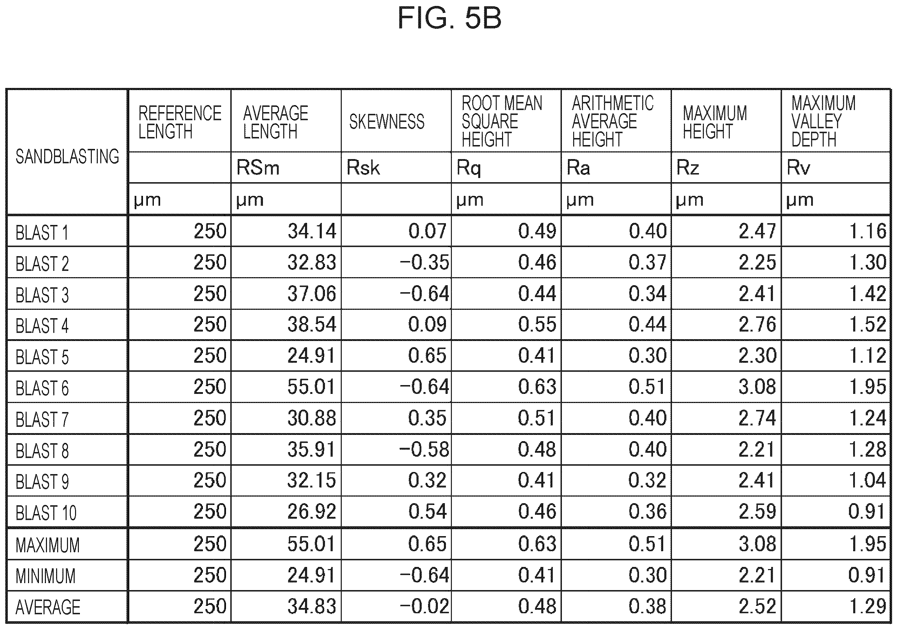

FIG. 5A is a table showing measurement values of each parameter of the surface roughness of the example. FIG. 5B is a table showing measurement values of each parameter of the surface roughness of the comparative example. The surface roughness measuring device includes a contact type using a stylus and a non-contact type using a laser or the like. In the present embodiment, the surface roughness was measured using a non-contact type surface roughness measuring device.

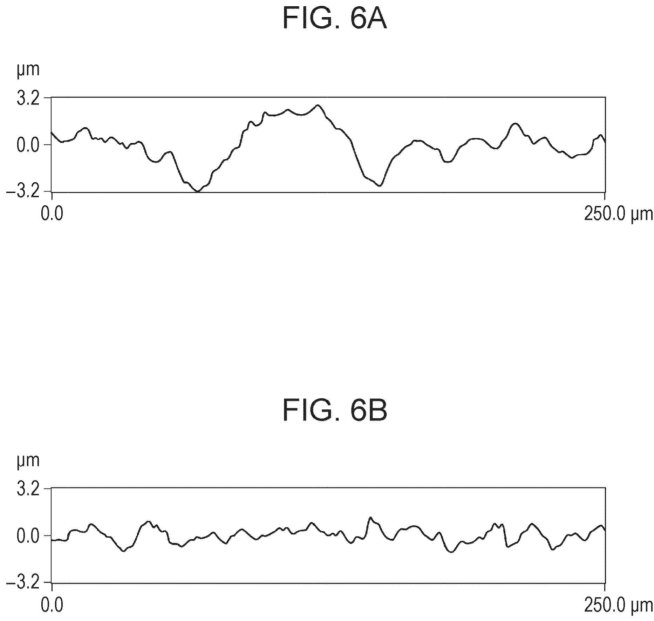

FIG. 6A is a roughness curve of the example obtained by measuring the surface roughness using the surface roughness measuring device along one of the ten reference lines of FIG. 4A. FIG. 6B is a roughness curve of the comparative example obtained by measuring the surface roughness using the surface roughness measuring device along one of the ten reference lines of FIG. 4B.

As illustrated in FIG. 5A, in the example, an average value of an average length RSm of the roughness curve is 94.03 µm, which is included in a range of 40 µm or more and 135 µm or less. On the other hand, as illustrated in FIG. 5B, in the comparative example, an average value of an average length RSm of the roughness curve is 34.83 µm, which is outside the range of 40 µm or more and 135 µm or less. Therefore, as illustrated in FIG. 6A, an interval between protrusions and recesses in the roughness curve of the example is larger compared to an interval of the comparative example illustrated in FIG. 6B.

The average value of the average length RSm being within a predetermined range means that the average value of the average length RSm of a plurality of roughness curves may be within the predetermined range even when the average length RSm of some of the roughness curves is outside the predetermined range. The same applies to other parameters.

As illustrated in FIG. 5A, in the example, an average value of a skewness Rsk is - 0.43, which is included in a range of -3.1 or more and 0 or less. As illustrated in FIG. 5B, in the comparative example, an average value of a skewness Rsk is -0.02, which is within the range of -3.1 or more and 0 or less. The average value of the skewness Rsks of the comparative example is close to 0 compared to the example. Therefore, in the comparative example, the protrusions and recesses of the surface are substantially uniform with respect to the average line, whereas in the example, the protrusions and recesses of the surface are biased upward with respect to the average line compared to the comparative example.

As illustrated in FIG. 5A, in the example, an average value of a root mean square height Rq of the roughness curve is 1.16 µm, which is included in a range of 0.7 µm or more and 1.8 µm or less. On the other hand, as illustrated in FIG. 5B, in the comparative example, an average value of a root mean square height Rq of the roughness curve is 0.48 µm, which is outside the range of 0.7 µm or more and 1.8 µm or less.

As illustrated in FIG. 5A, in the example, an average value of an arithmetic average height Ra of the roughness curve is 0.95 µm, which is included in a range of 0.6 µm or more and 1.5 µm or less. On the other hand, as illustrated in FIG. 5B, in the comparative example, an average value of an arithmetic average height Ra of the roughness curve is 0.38 µm, which is outside the range of 0.6 µm or more and 1.5 µm or less.

Therefore, as illustrated in FIGS. 6A and 6B, a difference in height between the protrusions and recesses is larger in the example than in the comparative example.

According to the present embodiment, the satin pattern is formed by laser processing, the average value of the average length RSm of the roughness curve of the surface is 40 µm or more and 135 µm or less, and the average value of the skewness Rsk is -3.1 or more and 0 or less, so that scratches caused when the timepiece component having the satin pattern formed is held with tweezers or the like become less noticeable.

That is, when the dial 10 is held with tweezers or the like, a predetermined load is applied to a satin-finished surface at which the satin pattern is formed, and the protrusions are crushed. Therefore, in a case where the interval between the protrusions and recesses of the satin pattern, that is, the average length RSm is small and the protrusions and recesses are biased downward with respect to the average line, that is, in a case where the skewness Rsk is positive and the protrusions are sharp, when the timepiece component is held with tweezers, some of the protrusions are easily crushed, and the crushed protrusions are coupled and appear in a linear shape, causing the scratches to be easily noticeable. In addition, when the average value of the average length RSm is greater than 135 µm, the interval between the protrusions and recesses of the satin pattern becomes too wide, resulting in a decrease in satin pattern-like appearance. When the skewness Rsk is less than -3.1, the protrusions of the satin pattern become flat and an area of the protrusions becomes significantly larger than an area of the recesses, resulting in a decrease in the satin pattern-like appearance.

Therefore, by forming the protrusions and recesses in the processing region 30 of the base 10A by laser irradiation, setting the average length RSm of the roughness curve of the surface of the processing region 30 to 40 µm or more and 135 µm or less, and setting the skewness Rsk to -3.1 or more and 0 or less, a satin pattern can be expressed, and the protrusions are less likely to be crushed when held with tweezers, so that the scratches can be less noticeable and degradation in design of the dial 10, which is a timepiece component, can be suppressed.

Since the laser irradiation device 20 can reproduce the same satin pattern by using a registered processing pattern, the dials 10 of consistent quality can be mass-produced. Therefore, the timepiece 1 having the dial 10 having a satin-finished appearance with a subdued gloss can be manufactured, so that a commercial value of the timepiece 1 can be improved.

### Modification Example

The scanning direction of the pulse laser 24 is not limited to that in the embodiment. That is, the scanning direction of the pulse laser 24 may be one, two, three, or more directions. For example, in the case of a dial, a satin pattern may be processed by scanning with the pulse laser 24 in a first direction coupling 12 o'clock and 6 o'clock, a second direction coupling 2 o'clock and 8 o'clock, and a third direction coupling 4 o'clock and 10 o'clock.

A configuration of the laser irradiation device 20, and processing conditions such as an output level of the pulse laser 24, the scanning speed V, the frequency f, the irradiation ON time Ton, and the irradiation OFF time Toff may be appropriately set according to the type and material of the timepiece component to be processed.

The timepiece component to be subjected to laser processing is not limited to the dial 10, and may include various timepiece components such as a case, a case back, a main plate, an oscillating weight, a center wheel bridge, a train wheel bridge, a balance bridge, and a setting wheel plate. In addition, the processing region may be an entire surface of the timepiece component or a part thereof, and a scanning path may be set according to the processing region, design, or the like.

### Summary of Present Disclosure

A timepiece component of the present disclosure is a timepiece component having a satin pattern formed, in which an average value of an average length RSm of a roughness curve of a surface of the satin pattern is 40 µm or more and 135 µm or less, and an average value of a skewness Rsk of the roughness curve is -3.1 or more and 0 or less.

According to the present disclosure, since the average value of the average length RSm of the roughness curve of the surface of the satin pattern is 40 µm or more and 135 µm or less, and the average value of the skewness Rsk of the roughness curve is -3.1 or more and 0 or less, scratches caused when the timepiece component having the satin pattern formed is held with tweezers or the like become less noticeable. Therefore, in a case of assembling a timepiece or the like, the timepiece component can be easily handled, and scratches on a satin pattern part are not noticeable, so that degradation in design of the timepiece component can be suppressed.

That is, when the average value of the average length RSm is less than 40 µm, the interval between the protrusions and recesses of the satin pattern becomes narrow, and thus, when the timepiece component is held with tweezers, a plurality of protrusions are crushed and appear to be coupled, causing the scratches to be easily noticeable. In addition, when the average value of the average length RSm is greater than 135 µm, the interval between the protrusions and recesses of the satin pattern becomes too wide, resulting in a decrease in satin pattern-like appearance.

In addition, when the skewness Rsk is less than -3.1, the protrusions of the satin pattern become flat and an area of the protrusions becomes significantly larger than an area of the recesses, resulting in a decrease in the satin pattern-like appearance. In addition, when the skewness Rsk is greater than 0, the protrusions are sharp, and the protrusions are easily crushed when hit by tweezers or the like, causing the scratches to be easily noticeable.

Therefore, by setting the average length RSm of the roughness curve of the surface processed to have protrusions and recesses to 40 µm or more and 135 µm or less, and setting the skewness Rsk to -3.1 or more and 0 or less, a satin pattern can be expressed, and the protrusions are less likely to be crushed when held with tweezers, so that scratches can be less noticeable and degradation in design of the timepiece component can be suppressed.

In the timepiece component of the present disclosure, it is preferable that an average value of a root mean square height Rq of the roughness curve is 0.7 µm or more and 1.8 µm or less.

Since the average value of the root mean square height Rq of the roughness curve of the surface of the satin pattern is 0.7 µm or more and 1.8 µm or less, the design of the satin pattern can be improved. That is, since the root mean square height Rq corresponds to a standard deviation of height, when the average value of the root mean square height Rq is as small as less than 0.7 µm, variation in height of the protrusions and recesses becomes small and the protrusions and recesses become regular, resulting in a decrease in the satin pattern-like appearance. In addition, when the average value of the root mean square height Rq is greater than 1.8 µm, the variation in height of the protrusions and recesses becomes too large, resulting in a decrease in the satin pattern-like appearance. On the other hand, by setting the average value of the root mean square height Rq to 0.7 µm or more and 1.8 µm or less, the design of the satin pattern can be improved.

In the timepiece component of the present disclosure, it is preferable that an average value of an arithmetic average height Ra of the roughness curve is 0.6 µm or more and 1.5 µm or less.

Since the average value of the arithmetic average height Ra of the roughness curve of the surface of the satin pattern is 0.6 µm or more and 1.5 µm or less, the design of the satin pattern can be improved. That is, when the average value of the arithmetic average height Ra is as small as less than 0.6 µm, the heights of the protrusions and recesses are reduced, resulting in a decrease in the satin pattern-like appearance. In addition, when the average value of the arithmetic average height Ra is greater than 1.5 µm, the heights of the protrusions and recesses become too large, resulting in a decrease in the satin pattern-like appearance. Contrary to this, by setting the average value of the arithmetic average height Ra to 0.6 µm or more and 1.5 µm or less, the design of the satin pattern can be improved.

In the timepiece component of the present disclosure, it is preferable that the satin pattern is formed by irradiating the timepiece component with a laser.

when the satin pattern is formed by irradiation with a laser, the same satin pattern can be reproduced by using a registered processing pattern, so that timepiece components of consistent quality can be mass-produced.

In the timepiece component of the present disclosure, it is preferable that the satin pattern is formed by scanning the timepiece component with a laser in a plurality of directions.

By scanning with the laser in a plurality of directions, a satin pattern having an improved satin-finished appearance can be formed.

In the timepiece component of the present disclosure, it is preferable that the timepiece component is any one of a dial, a case, a case back, a main plate, an oscillating weight, a center wheel bridge, a train wheel bridge, a balance bridge, and a setting wheel plate.

According to the present disclosure, the satin pattern can be expressed on these timepiece components, and scratches can be less noticeable when the timepiece component is held with tweezers. Therefore, assembly efficiency of the timepiece component can be improved, and the degradation in the design of the timepiece component can be suppressed.

In the timepiece component of the present disclosure, it is preferable that a base of the timepiece component is brass, titanium, stainless steel, pure iron, nickel silver, duralumin, steel, or an alloy thereof.

By using various metal materials as the base and performing rough surface processing by laser processing, a timepiece component with a sense of luxury can be provided. In addition, the laser processing can be easily performed by adjusting the output and the like according to the type of the base, and the processing region can be easily set, so that productivity can be improved compared to the sandblast processing.

A method for manufacturing a timepiece component of the present disclosure is a method for manufacturing a timepiece component, the method including: forming a satin pattern in a processing region of a base by irradiating the base with a laser, in which the base is processed such that an average value of an average length RSm of a roughness curve of a surface of the satin pattern is 40 µm or more and 135 µm or less, and an average value of a skewness Rsk of the roughness curve is -3.1 or more and 0 or less.

According to the present disclosure, the satin pattern in which the average value of the average length RSm of the roughness curve of the surface is 40 µm or more and 135 µm or less and the average value of the skewness Rsk of the roughness curve is -3.1 or more and 0 or less is processed, so that scratches caused when the timepiece component having the satin pattern formed is held with tweezers or the like become less noticeable. Therefore, in a case of assembling a timepiece or the like, the timepiece component can be easily handled, and scratches on a satin pattern part are not noticeable, so that degradation in design of the timepiece component can be suppressed.

In the method for manufacturing a timepiece component of the present disclosure, it is preferable that the base is processed such that an average value of a root mean square height Rq of the roughness curve is 0.7 µm or more and 1.8 µm or less.

According to the present disclosure, the satin pattern in which the average value of the root mean square height Rq of the roughness curve of the surface is 0.7 µm or more and 1.8 µm or less is processed, so that the design of the satin pattern can be improved when the protrusions and recesses are formed in the processing region by laser irradiation.

In the method for manufacturing a timepiece component of the present disclosure, it is preferable that the base is processed such that an average value of an arithmetic average height Ra of the roughness curve is 0.6 µm or more and 1.5 µm or less.

According to the present disclosure, the satin pattern in which the average value of the arithmetic average height Ra of the roughness curve of the surface is 0.6 µm or more and 1.5 µm or less is processed, so that the design of the satin pattern can be improved when the protrusions and recesses are formed in the processing region by laser irradiation.

## Claims

1. A timepiece component having a satin pattern formed, **characterised in that**
an average value of an average length RSm of a roughness curve of a surface of the satin pattern is 40 µm or more and 135 µm or less, and
an average value of a skewness Rsk of the roughness curve is -3.1 or more and 0 or less.

2. The timepiece component according to claim 1, wherein
an average value of a root mean square height Rq of the roughness curve is 0.7 µm or more and 1.8 µm or less.

3. The timepiece component according to claim 1 or 2, wherein
an average value of an arithmetic average height Ra of the roughness curve is 0.6 µm or more and 1.5 µm or less.

4. The timepiece component according to any one of claims 1 to 3, wherein
the satin pattern is formed by irradiating the timepiece component with a laser.

5. The timepiece component according to claim 4, wherein
the satin pattern is formed by scanning the timepiece component with a laser in a plurality of directions.

6. The timepiece component according to any one of claims 1 to 5, wherein
the timepiece component is any one of a dial, a case, a case back, a main plate, an oscillating weight, a center wheel bridge, a train wheel bridge, a balance bridge, and a setting wheel plate.

7. The timepiece component according to any one of claims 1 to 6, wherein
a base (10A) of the timepiece component is made of brass, titanium, stainless steel, pure iron, nickel silver, duralumin, steel, or an alloy containing at least one of these metals.

8. A method for manufacturing a timepiece component, the method comprising:
irradiating a base with a laser (24); and
forming a satin pattern in a processing region of the base, wherein
an average value of an average length RSm of a roughness curve of a surface of the satin pattern is 40 µm or more and 135 µm or less, and
an average value of a skewness Rsk of the roughness curve is -3.1 or more and 0 or less.

9. The method for manufacturing a timepiece component according to claim 8, wherein
an average value of a root mean square height Rq of the roughness curve is 0.7 µm or more and 1.8 µm or less.

10. The method for manufacturing a timepiece component according to claim 8 or 9, wherein
an average value of an arithmetic average height Ra of the roughness curve is 0.6 µm or more and 1.5 µm or less.

## Patentansprüche

1. Uhrkomponente mit einem gebildeten Satinmuster, **dadurch gekennzeichnet, dass**
ein Durchschnittswert einer Durchschnittslänge RSm einer Rauheitskurve einer Oberfläche des Satinmusters 40 µm oder mehr und 135 µm oder weniger ist, und
ein Durchschnittswert einer Schiefe Rsk der Rauheitskurve -3,1 oder mehr und 0 oder weniger ist.

2. Uhrkomponente nach Anspruch 1, wobei
ein Durchschnittswert einer mittleren quadratischen Höhe Rq der Rauheitskurve 0,7 µm oder mehr und 1,8 µm oder weniger ist.

3. Uhrkomponente nach Anspruch 1 oder 2, wobei
ein Durchschnittswert einer arithmetischen Durchschnittshöhe Ra der Rauheitskurve 0,6 µm oder mehr und 1,5 µm oder weniger ist.

4. Uhrkomponente nach einem der Ansprüche 1 bis 3, wobei
das Satinmuster durch Bestrahlen der Uhrkomponente mit einem Laser gebildet wird.

5. Uhrkomponente nach Anspruch 4, wobei
das Satinmuster durch Abtasten der Uhrkomponente mit einem Laser in mehreren Richtungen gebildet wird.

6. Uhrkomponente nach einem der Ansprüche 1 bis 5, wobei
die Uhrkomponente eines von einem Zifferblatt, einem Gehäuse, einer Gehäuserückseite, einer Hauptplatine, einem Schwunggewicht, einer Mittelradbrücke, einer Räderwerksbrücke, einer Unruhbrücke und einer Einstellradplatte ist.

7. Uhrkomponente nach einem der Ansprüche 1 bis 6, wobei
eine Basis (10A) der Uhrkomponente aus Messing, Titan, Edelstahl, reinem Eisen, Neusilber, Duraluminium, Stahl oder einer Legierung, die mindestens eines dieser Metalle enthält, gefertigt ist.

8. Verfahren zum Herstellen einer Uhrkomponente, wobei das Verfahren umfasst:
Bestrahlen einer Basis mit einem Laser (24); und
Bilden eines Satinmusters in einem Bearbeitungsbereich der Basis, wobei
ein Durchschnittswert einer Durchschnittslänge RSm einer Rauheitskurve einer Oberfläche des Satinmusters 40 µm oder mehr und 135 µm oder weniger ist, und
ein Durchschnittswert einer Schiefe Rsk der Rauheitskurve -3,1 oder mehr und 0 oder weniger ist.

9. Verfahren zum Herstellen einer Uhrkomponente nach Anspruch 8, wobei
ein Durchschnittswert einer mittleren quadratischen Höhe Rq der Rauheitskurve 0,7 µm oder mehr und 1,8 µm oder weniger ist.

10. Verfahren zum Herstellen einer Uhrkomponente nach Anspruch 8 oder 9, wobei
ein Durchschnittswert einer arithmetischen Durchschnittshöhe Ra der Rauheitskurve 0,6 µm oder mehr und 1,5 µm oder weniger ist.

## Revendications

1. Composant horloger sur lequel est formé un motif satiné, **caractérisé en ce que**
une valeur moyenne d'une longueur moyenne RSm d'une courbe de rugosité d'une surface du motif satiné est de 40 µm ou plus et de 135 µm ou moins, et
une valeur moyenne d'une asymétrie Rsk de la courbe de rugosité est de -3,1 ou plus et de 0 ou moins.

2. Composant horloger selon la revendication 1, dans lequel
une valeur moyenne d'une hauteur quadratique moyenne Rq de la courbe de rugosité est de 0,7 µm ou plus et de 1,8 µm ou moins.

3. Composant horloger selon la revendication 1 ou 2, dans lequel
une valeur moyenne d'une hauteur moyenne arithmétique Ra de la courbe de rugosité est de 0,6 µm ou plus et de 1,5 µm ou moins.

4. Composant horloger selon l'une quelconque des revendications 1 à 3, dans lequel
le motif satiné est réalisé par irradiation du composant horloger au moyen d'un laser.

5. Composant horloger selon la revendication 4, dans lequel
le motif satiné est réalisé par balayage du composant horloger au moyen d'un laser dans une pluralité de directions.

6. Composant horloger selon l'une quelconque des revendications 1 à 5, dans lequel
le composant horloger est l'un quelconque parmi un cadran, un boîtier, un dos de boîtier, une platine principale, une masse oscillante, un pont de roue de centre, un pont de rouage, un pont de balancier, et une plaque de roue de réglage.

7. Composant horloger selon l'une quelconque des revendications 1 à 6, dans lequel
une base (10A) du composant horloger est constituée de laiton, de titane, d'acier inoxydable, de fer pur, de maillechort, de duralumin, d'acier ou d'un alliage contenant au moins l'un de ces métaux.

8. Procédé de fabrication d'un composant horloger, le procédé comprenant :
l'irradiation d'une base au moyen d'un laser (24) ; et
la formation d'un motif satiné dans une région de traitement de la base, dans lequel
une valeur moyenne d'une longueur moyenne RSm d'une courbe de rugosité d'une surface du motif satiné est de 40 µm ou plus et de 135 µm ou moins, et
une valeur moyenne d'une asymétrie Rsk de la courbe de rugosité est de -3,1 ou plus et de 0 ou moins.

9. Procédé de fabrication d'un composant horloger selon la revendication 8, dans lequel
une valeur moyenne d'une hauteur quadratique moyenne Rq de la courbe de rugosité est de 0,7 µm ou plus et de 1,8 µm ou moins.

10. Procédé de fabrication d'un composant horloger selon la revendication 8 ou 9, dans lequel
une valeur moyenne d'une hauteur moyenne arithmétique Ra de la courbe de rugosité est de 0,6 µm ou plus et de 1,5 µm ou moins.
